# EUROPEAN PATENT SPECIFICATION

(11) **EP 4 748 003 B1**
(45) Date of publication and mention of the grant of the patent: **11.11.2026**
(21) Application number: 24743057.2
(22) Date of filing: 11.07.2024
(51) Int. Cl.: H04L 9/40, H04L 69/22

(54) **INTERNET PROTOCOL SECURITY ANTI-REPLAY**
INTERNETPROTOKOLLSICHERHEITS-REPLAY
SÉCURITÉ DE PROTOCOLE INTERNET ANTI-RÉPÉTITION

(30) Priority: 18.07.2023 WO PCT/CN2023/107925
(43) Date of publication of application: 27.05.2026
(73) Proprietor: Telefonaktiebolaget LM Ericsson (publ), 164 83 Stockholm (SE)
(72) Inventor: LIU, Daiying, 100102 Beijing (SE); MIGAULT, Daniel, Montreal, Québec H2R 2S7 (CA); HALPERN, Joel, Leesburg, Virginia 20176 (US); PARKHOLM, Bo Ulf, 741 92 KNIVSTA (SE)
(74) Representative: Ericsson
(86) International application number: PCT/SE2024/050681
(87) International publication number: WO 2025/018931

(56) References cited:
- US-A1- 2019 372 948
- ROSSBERG TU ILMENAU S KLASSERT SECUNET M PFEIFFER TU ILMENAU M: "Problem statements and uses cases for lightweight Child Security Associations draft-mrossberg-ipsecme-multiple-sequence-counters-00; draft-mrossberg-ipsecme-multiple-sequence-counters-00.txt", 28 February 2023 (2023-02-28), pages 1 - 15, XP015158051, Retrieved from the Internet <URL:https://tools.ietf.org/html/draft-mrossberg-ipsecme-multiple-sequence-counters-00> [retrieved on 20230228]
- PONCHON M SHAIKH P PFISTER G SOLIGNAC CISCO MERAKI P: "IPsec and IKE anti-replay sequence number subspaces for traffic- engineered paths and multi-core processing draft-ponchon-ipsecme-anti-replay-subspaces-01; draft-ponchon-ipsecme-anti-replay-subspaces-01.txt", no. 1, 13 March 2023 (2023-03-13), pages 1 - 12, XP015158789, Retrieved from the Internet <URL:https://tools.ietf.org/html/draft-ponchon-ipsecme-anti-replay-subspaces-01> [retrieved on 20230313]

## Description

### TECHNICAL FIELD

Disclosed are embodiments related to Internet Protocol Security (IPsec) anti-replay.

### BACKGROUND

Internet Protocol Security (IPsec) is a suite of protocols and algorithms for securing data transmitted over the internet or any public network. The Internet Engineering Task Force (IETF) developed the IPsec in the mid-1990s to provide security at the Internet Protocol (IP) layer through authentication and encryption of IP protocol data units (PDUs) (a.k.a., IP packets). IPsec is used for protecting sensitive data, such as financial transactions, medical records, and corporate communications, as it's transmitted across the network.

The Encapsulating Security Payload (ESP) is one of the protocols in the IPsec suite of protocols. When the ESP protocol is used to secure IP packets, at least a portion of the IP packets are encrypted using one or more security association (SAs) for the IPsec connection. Internet Key Exchange (IKE) is a standard protocol used for creating the SAs that are needed by ESP.

More specifically, in some scenarios, when ESP is used to protect an IP PDU, the payload of the IP PDU (e.g., a Transmission Control Protocol (TCP) PDU or User Datagram Protocol (UDP) PDU or other transport layer PDU) is replaced with an ESP PDU, which consists of: an ESP header, ESP payload data, an ESP trailer, and ESP authentication data. In some scenarios, the ESP payload data may be an encrypted version of the payload of the original IP PDU that was encrypted using a key associated with an SA. The ESP header includes a 32 bit index field for specifying an index that is used for identifying the SA. More specifically, the index combined with the IP destination address and security protocol type included in the IP header for the IP PDU identify the SA.

Hackers often try to make changes to packets that travel from a source to a destination. To defeat such an attack, so called "anti-replay" techniques are used. One common anti-replay technique is to use packet sequence numbers. This works as follows: when the source sends an IP PDU, it adds a sequence number to the IP PDU; the sequence number starts at 0 and is incremented by 1 for each subsequent packet. The destination maintains a "sliding window" record of the sequence numbers of validated received packets; it rejects all packets which have a sequence number which is lower than the lowest in the sliding window (i.e. too old) or already appears in the sliding window (i.e. duplicates/replays). Accepted packets, once validated, update the sliding window (displacing the lowest sequence number out of the window if it was already full).

ESP employs such sequence numbers to provide protection against replay attacks. More specifically, the ESP header includes a 32 bit Sequence Number field for specifying a sequence number. This sequence number is initialized to zero when the security association identified by the index is formed, and is then incremented for each IP PDU (a.k.a., "datagram") that includes an ESP header with the index.

As described in reference [1] problems exist with respect to running IPsec with anti-replay in conjunction with traffic-engineered paths or multi-core systems. For instance, as noted in reference [1], "[s]caling the current anti-replay mechanism to run on multiple cores concurrently shows performance limitations: - When receiving a packet, preventing the same IPsec packet from being accepted by two different cores in parallel requires constant synchronization between the cores. - When transmitting a packet, sequence numbers must be allocated efficiently, and packets must be transmitted without too much re-ordering, as to not exceed the receiver's anti-replay window size. This also ends-up requiring locks and synchronization between cores."

Reference [1] attempts to solve the problems by modifying the anti-replay mechanism by allowing to split the 64 bit (with Extended Sequence Number (ESN)) anti-replay sequence number space into multiple subspaces. Each core, path, or QoS class, or any combination of those, can then use their own unique anti-replay sequence number subspace.

US 2019/372948A1 discloses a method for identifying a plurality of data packets in a received data stream from a secure tunnel, including a flow identification and an encrypted data portion, wherein the flow identification is used to distribute the packets to an associated processing core.

### SUMMARY

Certain challenges presently exist. For instance, the solution described in reference [1] requires the sender and receiver to support the ESN feature, but the ESN feature is no mandatory for IPsec. Accordingly, many devices may not support ESN, which makes the solution described in reference [1] limited.

Accordingly, in one aspect there is provided a method according to claim 1.

In another aspect there is provided a computer program comprising instructions which when executed by processing circuitry of a network node causes the network node to perform any of the methods disclosed herein. In one embodiment, there is provided a carrier containing the computer program wherein the carrier is one of an electronic signal, an optical signal, a radio signal, and a computer readable storage medium. In another aspect there is provided a network node that is configured to perform the methods disclosed herein. The network node may include memory and processing circuitry coupled to the memory.

An advantage of the embodiments disclosed herein is that they reduce the anti-replay problems without requiring the network nodes to support the ESN function.

### BRIEF DESCRIPTION OF THE DRAWINGS

The accompanying drawings, which are incorporated herein and form part of the specification, illustrate various embodiments.
FIG. 1 illustrates a communication system according to some embodiments.
FIG. 2 illustrate a modified ESP header according to some embodiments.
FIG. 3 is a message flow diagram according to some embodiments.
FIG. 4A illustrates an IP PDU according to some embodiments.
FIG. 4B illustrates an SPH according to some embodiments.
FIG. 5 is a flowchart illustrating a process according to some embodiments.
FIG. 6 is a block diagram of a network node according to some embodiments.

### DETAILED DESCRIPTION

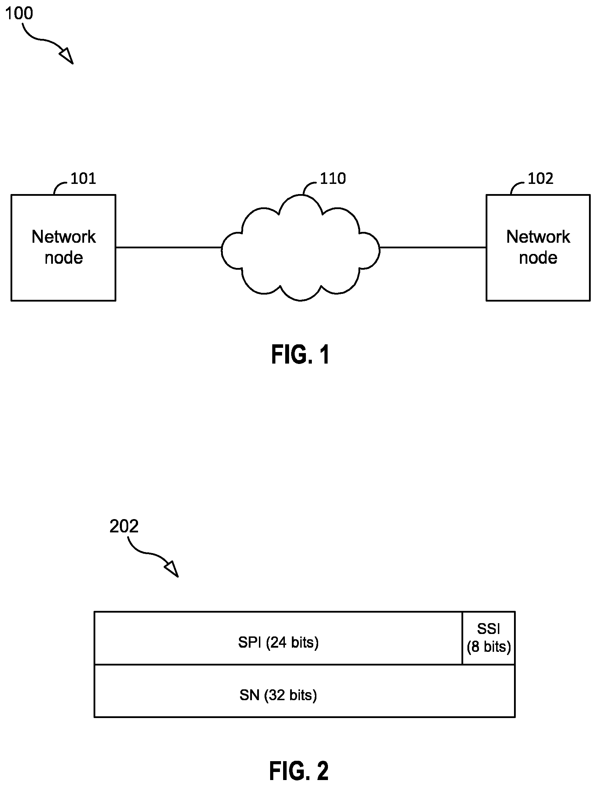

FIG. 1 illustrates a communication system 100 according to an embodiment. System 100 includes a first network node 101 that is capable of communicating with a second network node 102 via a network 110 (e.g., the internet or other public network) using the ESP IPsec protocol. One or both of the network node may have a multi-core processing unit comprising two or more core processors (a.k.a., cores for short) and one or both may use traffic-engineering. As used herein, a "network node" is any device capable of sending data to another network node via network 110 and of receiving data transmitted by the another network node. As an example, a network node can be a mobile phone, a tablet, a gateway, a router, a bridge, a personal computer, a server, a sensor, an appliance, any Internet-of-Things (IoT) device, an access point, etc.

As noted above, performance limitation may arise when a network node having multiple cores uses the current ESP anti-replay mechanism. For example, preventing the same IPsec packet from being accepted by two different cores in parallel requires tight synchronization between the cores.

This disclosure provides embodiments to reduce the performance limitations when using an anti-replay mechanism to run on multiple cores concurrently. In a conventional, non-ESN environment, the ESP header consists of 64 bits: a 32 bit index field and a 32 bit sequence number (SN) field. But in an embodiment of this disclosure, the 64 bit ESP header is modified such that the header consists of: an N bit security parameter index (SPI) field, an M bit SN subspace identifier (SSI) field, and a 32 bit SN field, where M + N = 32 and both M and N are greater than 1. An example of such a modified ESP header 202 is illustrated in FIG. 2. In the embodiment shown in FIG. 2, the modified ESP header 202 begins with a 24 bit SPI field, followed by an 8 bit (1 byte) SSI field, followed by the 32 bit SN field.

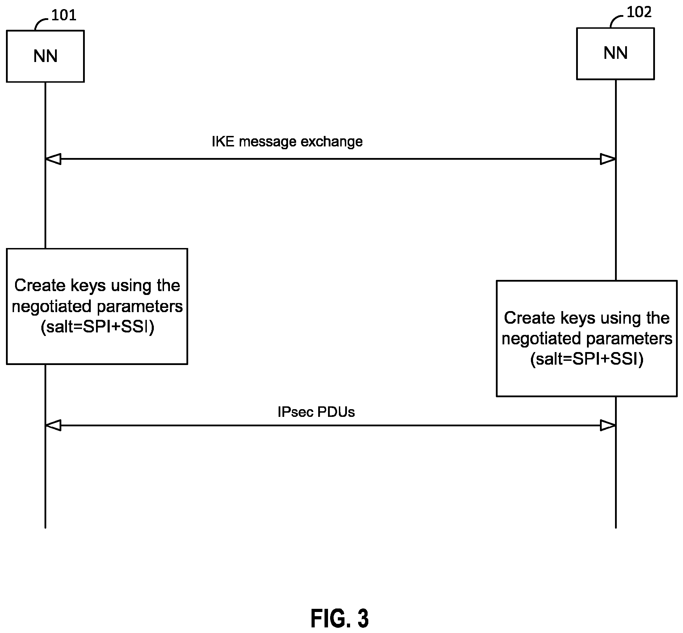

FIG. 3 illustrates a message flow diagram according to an embodiment. In this embodiment, network node 101 desires to communicate securely with network node 102. Accordingly, the message flow may begin with an IKE message exchange between the network nodes to establish a required SA (e.g., a Child SA as is known in the art). This IKE message exchange may include network node 101 sending to network node 102 an IKE request message (e.g., a CREATE_CHILD_SA request) containing transform information. In one embodiment, the transform information includes: attribute information indicating the number of subspaces supported by network node 101, attribute information indicating the number of subspaces being requested, and attribute information indicating that network node 101 requests use of an ESP header where the SPI field is shorter than 32 bits (e.g., 24 bits). If network node 102 does not support use of such a requested ESP header, then network node may indicate this to network node 101 by sending to network node 101 a response message with a negative acknowledgment.

Assuming, network node 102 supports the requested SA, then the network nodes create a key for each one of the SN subspaces. More specifically, for each SN subspace, each network node generates a key using the SPI for the negotiated SA and the subspace ID for the SN subspace. For instance, assuming that the GCM-AES encryption algorithm is used to generate the keys, then to generate a key for a particular subspace of the SA, the "salt" field of the nonce passed to the GCM-AES encryption algorithm is filled with the SPI combined with the SN subspace ID. After the keys are created, the network nodes can send IPsec PDUs to each other, where the IP PDUs are protected using a certain SA.

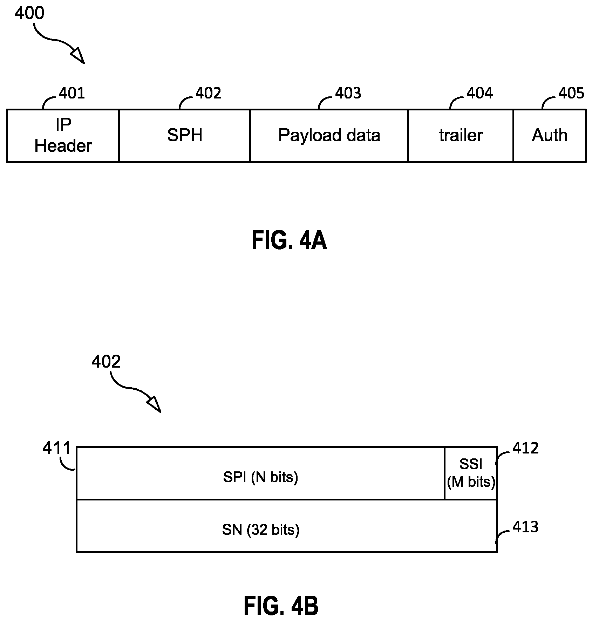

FIG. 4A illustrates an exemplary IP PDU 400 that network node 101 can send to (or receive from) network node 102. IP PDU 400 includes an IP header 401, followed by a security payload header (SPH) 402, payload data 403, a trailer 404, and authentication data (Auth) 405. FIG. 4B illustrate SPH 402 according to an embodiment. In the embodiment shown, SPH 402 consists of: a N bit SPI field specifying an SPI for use in identifying the certain SA, a M bit SSI field specifying an SSI identifying an SN subspace selected by the network node that generated the IPsec PDU (i.e., the "sender"), and a 32 bit SN filed specifying an SN (i.e., specifying the value of an SN counter associated with the SSI), where M + N = 32 (e.g., M=8 and N=24). The payload data 403 may comprise an encrypted transport layer PDU that was encrypted using the key associated with the specified SPI and SSI tuple.

The sender maintains one sequence number counter per sequence number subspace that it makes use of. When transmitting a packet, the sender should use the sequence number counter associated with the sequence number subspace in use for that packet.

The receiver maintains one anti-replay window and counter for each sequence number subspace being used. When receiving a packet, the receiver should use the anti-replay window and counter associated with the sequence number subspace identified with the subspace ID field.

By using sequence number subspaces, IPsec peers (e.g., network nodes 101 and 102) may: (1) use different subspaces for different cores, which allows distributing an SA (e.g., a Child SA) between cores to increase performance; (2) use different subspaces for different QoS classes or different paths, which avoids unwanted drops due to potential reordering of packets; and/or (3) combine the above per-QoS-queue, per-path, and per-core approaches without multiplying the number of required SAs.

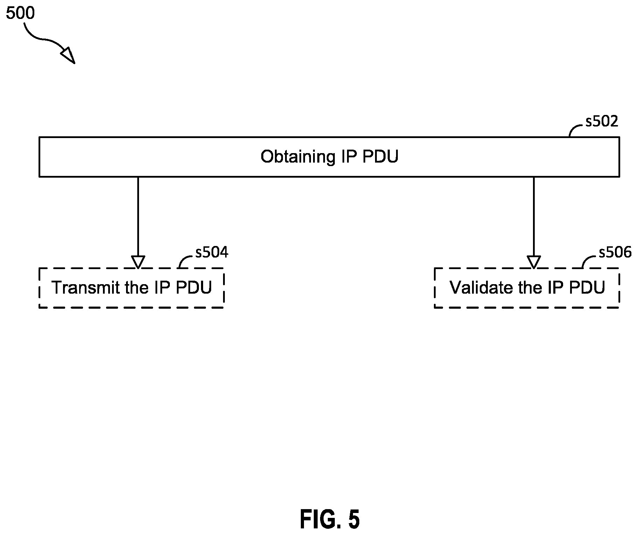

FIG. 5 is a flow chart illustrating a process 500, according to an embodiment. Process 500 may begin in step s502. Step s502 comprises obtaining a first IP PDU (e.g., IP PDU 400). The first IP PDU includes an IP header, a security payload header (SPH) following the IP header, and payload data following the SPH (the payload data may comprise encrypted payload data and/or be integrity protected). The SPH includes an SPI field specifying an SPI for use in identifying an SA, a subspace identifier (SSI) field specifying an SSI for identifying an SN subspace, and an SN field specifying an SN. The SN field is not more than 32 bits in length.

In some embodiments, the SSI field immediately follows the SPI field, the SPI field immediately follows the SSI field, or the SSI field immediately follows the SN field.

In some embodiments, the SPI field consists of N bits, N < 32 and N > 1, the SSI field consists of M bits, M = (32 - N), and the SN field consists of 32 bits. In some embodiments, N = 24.

In some embodiments, the SSI field immediately follows the SPI field and the SN field immediately follows the SSI field.

In some embodiments, obtaining the first IP PDU comprises generating the first IP PDU, and process further comprises transmitting the first IP PDU (step s504).

In some embodiments, the IP header contains a differentiated services code point (DSCP) value, and the SSI specified in the SSI field was selected based on the DCSP value.

In some embodiments, obtaining the first IP PDU comprises receiving the first IP PDU, and process 500 further comprises validating the first IP PDU using a window identified by a window identifier based on the SPI and SSI (step s506). For example, the window identifier may be a combination of the destination IP address in the IP header, the SPI, and the SSI.

In some embodiments process 500 also includes selecting a processor (e.g., a core processor of a multi-core processing unit or software processor, such as, for example, a process running on a core processor) based on the SSI specified by the SSI field and providing the first IP PDU to the selected processor so that the selected processor can process the IP PDU. For instance, selecting a processor based on the SSI specified by the SSI filed may comprise: i) forming an n-tuple (e.g., a 6-tuple) comprising the SSI and one or more other values contained the IP PDU, such as, for example, the IP destination address from the IP header, the IP source address from IP header, a source port number from a transport layer protocol header encapsulated by the IP PDU, a destination port number from the transport layer protocol header, and/or protocol identifier from the IP header and ii) using the n-tuple to select the processor (e.g., a look-up table may be used to map n-tuples to processors).

In some embodiments process 500 also includes, prior to obtaining the first IP PDU, obtaining a request for establishing the SA, wherein the request comprises an indicator for indicating that any SPI field in an SPH associated with the SA will be less than 32 bits.

In some embodiments process 500 also includes, prior to obtaining the first IP PDU, generating a key using the SPI and the SSI; and using the key to generate the encrypted payload data.

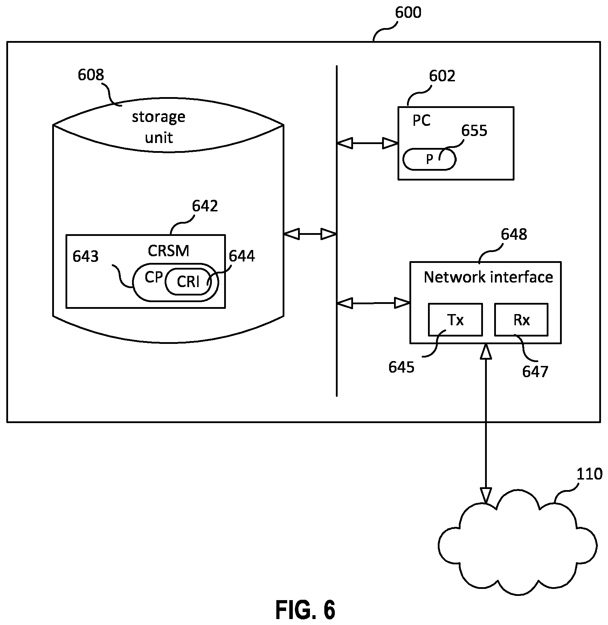

FIG. 6 is a block diagram of network node 101, according to some embodiments (network node 102 may have the same components and architecture as network node 101). As shown in FIG. 6, network node 101 may comprise: processing circuitry (PC) 602, which may include one or more processors (P) 655 (e.g., one or more general purpose microprocessors and/or one or more other processors, such as an application specific integrated circuit (ASIC), field-programmable gate arrays (FPGAs), and the like), which processors may be co-located in a single housing or in a single data center or may be geographically distributed (e.g., network node 101 may be a distributed computing apparatus comprising two or more computers or a monolithic computing apparatus consisting of a single computer); at least one network interface 648 (e.g., a physical interface or air interface) comprising a transmitter (Tx) 645 and a receiver (Rx) 647 for enabling network node 101 to transmit data to and receive data from other nodes (e.g., network node 102) connected to network 110 (e.g., an Internet Protocol (IP) network) to which network interface 648 is connected (physically or wirelessly) (e.g., network interface 648 may be coupled to an antenna arrangement comprising one or more antennas for enabling network node 101 to wirelessly transmit/receive data); and a storage unit (a.k.a., "data storage system") 608, which may include one or more non-volatile storage devices and/or one or more volatile storage devices. In embodiments where PC 602 includes a programmable processor, a computer readable storage medium (CRSM) 642 may be provided. CRSM 642 may store a computer program (CP) 643 comprising computer readable instructions (CRI) 644. CRSM 642 may be a non-transitory computer readable medium, such as, magnetic media (e.g., a hard disk), optical media, memory devices (e.g., random access memory, flash memory), and the like. In some embodiments, the CRI 644 of computer program 643 is configured such that when executed by PC 602, the CRI causes network node 101 to perform steps described herein (e.g., steps described herein with reference to the flow charts). In other embodiments, network node 101 may be configured to perform steps described herein without the need for code. That is, for example, PC 602 may consist merely of one or more ASICs. Hence, the features of the embodiments described herein may be implemented in hardware and/or software.

While various embodiments are described herein, it should be understood that they have been presented by way of example only, and not limitation. The scope of the invention is only defined by the appended claims.

As used herein transmitting a message "to" or "toward" an intended recipient encompasses transmitting the message directly to the intended recipient or transmitting the message indirectly to the intended recipient (i.e., one or more other nodes are used to relay the message from the source node to the intended recipient). Likewise, as used herein receiving a message "from" a sender encompasses receiving the message directly from the sender or indirectly from the sender (i.e., one or more nodes are used to relay the message from the sender to the receiving node). Further, as used herein "a" means "at least one" or "one or more."

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

### References

[1] Ponchon, P., et. al., "IPsec and IKE anti-replay sequence number subspaces for traffic-engineered paths and multi-core processing," Internet Draft, 13 March 2023 (available at datatracker.ietf.org/doc/pdf/draft-ponchon-ipsecme-anti-replay-subspaces-01).
[2] Rossberg, M., et. al., "Problem statements and uses cases for lightweight Child SecurityAssociations," Internet Draft, 27 Feb. 2023 (available at www.ietf.org/archive/id/draft-mrossberg-ipsecme-multiple-sequence-counters-00.txt).
[3] Wouters, P., et. al, "IKEv2 support for per-queue Child SAs," Internet Draft, 8 Nov. 2022 (available at www.ietf.org/archive/id/draft-pwouters-ipsecme-multi-sa-performance-05.txt).
[4] RFC 7296: Internet Key Exchange Protocol Version 2 (IKEv2).

## Claims

1. A method (500) performed by a first network node (101, 102), the method comprising:
obtaining (s502) a first Internet Protocol, IP, protocol data unit, PDU (400), the first IP PDU comprising:
an IP header (401);
a security payload header, SPH (402), following the IP header, the SPH comprising: a security parameter index, SPI, field (411) specifying an SPI for use in identifying a security association, SA; a subspace identifier, SSI, field (412) specifying an SSI for identifying a sequence number, SN, subspace; and an SN field (413) specifying an SN; and
payload data following the SPH, wherein
the SN field consists of 32 bits, the SSI field consists of 8 bits, and the SPI field consists of 24 bits.

2. The method of claim 1, wherein the SSI field immediately follows the SPI field and the SN field immediately follows the SSI field.

3. The method of any one of claims 1-2, wherein
obtaining the first IP PDU comprises generating the first IP PDU, and
the method further comprises transmitting (s504) the first IP PDU.

4. The method of any one of claims 1-2, wherein
obtaining the first IP PDU comprises receiving the first IP PDU, and
the method further comprises validating (s506) the first IP PDU using a window identified by a window identifier based on the SPI and SSI.

5. The method of any one of claims 1-4, further comprising:
selecting a processor based on the SSI specified by the SSI field; and
providing the first IP PDU to the selected processor.

6. The method of any one of claims 1-5, further comprising, prior to obtaining the first IP PDU, obtaining a request for establishing the SA, wherein the request comprises an indicator for indicating that any SPI field in an SPH associated with the SA will be less than 32 bits.

7. The method of any one of claims 1-6, wherein
the payload data comprises encrypted payload data, and
the method further comprises: prior to obtaining the first IP PDU, generating a key using the SPI and the SSI and using the key to generate the encrypted payload data.

8. A computer program (643) comprising instructions (644) which when executed by processing circuitry (602) of a network node causes the network node to perform the method of any one of claims 1-7.

9. A carrier containing the computer program of claim 8, wherein the carrier is one of an electronic signal, an optical signal, a radio signal, and a computer readable storage medium (642).

10. A network node (101, 102), the network node comprising:
a receiver;
a transmitter; and
processing circuitry, wherein the network node is configured to:
obtain a first Internet Protocol, IP, protocol data unit, PDU (400), the first IP PDU comprising:
an IP header (401);
a security payload header, SPH (402), following the IP header, the SPH comprising: a security parameter index, SPI, field (411) specifying an SPI for use in identifying a security association, SA; a subspace identifier, SSI, field (412) specifying an SSI for identifying a sequence number, SN, subspace; and an SN field (413) specifying an SN; and
payload data following the SPH, wherein
the SN field consists of 32 bits, the SSI field consists of 8 bits, and the SPI field consists of 24 bits.

11. The network node of claim 10, wherein the network node is further configured to perform the method of any one of claims 2-7.

## Patentansprüche

1. Verfahren (500), das durch einen Netzwerkknoten (101, 102) durchgeführt wird, wobei das Verfahren Folgendes umfasst:
Erlangen (s502) einer ersten Internetprotokoll-, IP-, Protokolldateneinheit, PDU (400), wobei die erste IP-PDU Folgendes umfasst:
einen IP-Header (401),
einen Sicherheitsnutzlast-Header, SPH (402), der dem IP-Header folgt, wobei der SPH Folgendes umfasst: ein Sicherheitsparameterindex-, SPI-, Feld (411), das einen SPI zur Verwendung beim Identifizieren einer Sicherheitszuordnung, SA, spezifiziert; ein Unterraumkennungs-, SSI-, Feld (412), das eine SSI zum Identifizieren eines Sequenznummer-, SN-, Unterraums spezifiziert; und ein SN-Feld (413), das eine SN spezifiziert; und
Nutzlastdaten, die dem SPH folgen, wobei
das SN-Feld aus 32 Bits besteht, das SSI-Feld aus 8 Bits besteht und das SPI-Feld aus 24 Bits besteht.

2. Verfahren nach Anspruch 1, wobei das SSI-Feld unmittelbar auf das SPI-Feld folgt und das SN-Feld unmittelbar auf das SSI-Feld folgt.

3. Verfahren nach einem der Ansprüche 1-2, wobei
das Erlangen der ersten IP-PDU das Generieren der ersten IP-PDU umfasst, und
das Verfahren ferner das Senden (s504) der ersten IP-PDU umfasst.

4. Verfahren nach einem der Ansprüche 1-2, wobei
das Erlangen der ersten IP-PDU das Empfangen der ersten IP-PDU umfasst, und
das Verfahren ferner das Validieren (s506) der ersten IP-PDU unter Verwendung eines Fensters, das durch eine Fensterkennung identifiziert wird, basierend auf dem SPI und der SSI umfasst.

5. Verfahren nach einem der Ansprüche 1-4, ferner umfassend:
Auswählen eines Prozessors basierend auf der SSI, die durch das SSI-Feld spezifiziert wird; und
Bereitstellen der erste IP-PDU für den ausgewählten Prozessor.

6. Verfahren nach einem der Ansprüche 1-5, ferner umfassend Erlangen einer Anforderung zum Einrichten der SA vor dem Erlangen der ersten IP-PDU, wobei die Anforderung einen Indikator zum Anzeigen, dass ein beliebiges SPI-Feld in einem SPH, welcher der SA zugeordnet ist, weniger als 32 Bits beträgt, umfasst.

7. Verfahren nach einem der Ansprüche 1-6, wobei
die Nutzlastdaten verschlüsselte Nutzlastdaten umfassen, und
das Verfahren ferner Folgendes umfasst: vor dem Erlangen der ersten IP-PDU, Generieren eines Schlüssels unter Verwendung des SPI und der SSI sowie Verwenden des Schlüssels, um die verschlüsselten Nutzlastdaten zu generieren.

8. Computerprogramm (643), umfassend Anweisungen (644), welche bei Ausführung durch eine Verarbeitungsschaltung (602) eines Netzwerkknotens bewirken, dass der Netzwerkknoten das Verfahren nach einem der Ansprüche 1-7 durchführt.

9. Träger, enthaltend das Computerprogramm nach Anspruch 8, wobei der Träger eines von einem elektronischen Signal, einem optischen Signal, einem Funksignal und einem computerlesbaren Speichermedium (642) ist.

10. Netzwerkknoten (101, 102), wobei der Netzwerkknoten Folgendes umfasst:
einen Empfänger;
einen Sender; und
eine Verarbeitungsschaltung, wobei der Netzwerkknoten dazu konfiguriert ist:
eine erste Internetprotokoll-, IP-, Protokolldateneinheit, PDU (400) zu erlangen, wobei die erste IP-PDU Folgendes umfasst:
einen IP-Header (401),
einen Sicherheitsnutzlast-Header, SPH (402), der dem IP-Header folgt, wobei der SPH Folgendes umfasst: ein Sicherheitsparameterindex-, SPI-, Feld (411), das einen SPI zur Verwendung beim Identifizieren einer Sicherheitszuordnung, SA, spezifiziert; ein Unterraumkennungs-, SSI-, Feld (412), das eine SSI zum Identifizieren eines Sequenznummer-, SN-, Unterraums spezifiziert; und ein SN-Feld (413), das eine SN spezifiziert; und
Nutzlastdaten, die dem SPH folgen, wobei
das SN-Feld aus 32 Bits besteht, das SSI-Feld aus 8 Bits besteht und das SPI-Feld aus 24 Bits besteht.

11. Netzwerkknoten nach Anspruch 10, wobei der Netzwerkknoten ferner dazu konfiguriert ist, das Verfahren nach einem der Ansprüche 2-7 durchzuführen.

## Revendications

1. Procédé (500) exécuté par un premier nœud de réseau (101, 102), le procédé comprenant les étapes consistant à :
obtenir (s502) une première unité de données de protocole, PDU, du protocole internet, IP (400), la première PDU IP comprenant :
un en-tête IP (401) ;
un en-tête de charge utile de sécurité, SPH (402), situé à la suite de l'en-tête IP, le SPH comprenant : un champ d'index de paramètre de sécurité, SPI (411), spécifiant un SPI destiné à identifier une association de sécurité, SA ; un champ d'identifiant de sous-espace, SSI (412), spécifiant un SSI destiné à identifier un sous-espace de numéro de séquence, SN ; et un champ de SN (413) spécifiant un SN ; et
des données de charge utile situées à la suite du SPH,
dans lequel le champ de SN est constitué de 32 bits, le champ de SSI est constitué de 8 bits, et le champ de SPI est constitué de 24 bits.

2. Procédé selon la revendication 1, dans lequel le champ de SSI suit immédiatement le champ de SPI et le champ de SN suit immédiatement le champ de SSI.

3. Procédé selon l'une quelconque des revendications 1 à 2, dans lequel :
l'obtention de la première PDU IP comprend la génération de la première PDU IP, et
le procédé comprend en outre l'étape consistant à transmettre (s504) la première PDU IP.

4. Procédé selon l'une quelconque des revendications 1 à 2, dans lequel :
l'obtention de la première PDU IP comprend la réception de la première PDU IP, et
le procédé comprend en outre l'étape consistant à valider (s506) la première PDU IP au moyen d'une fenêtre de réception identifiée par un identifiant de fenêtre basé sur le SPI et le SSI.

5. Procédé selon l'une quelconque des revendications 1 à 4, comprenant en outre les étapes consistant à :
sélectionner un processeur sur la base du SSI spécifié par le champ de SSI ; et
fournir la première PDU IP au processeur sélectionné.

6. Procédé selon l'une quelconque des revendications 1 à 5, comprenant en outre l'étape consistant à, avant d'obtenir la première PDU IP, obtenir une requête d'établissement de la SA, dans lequel la requête comprend un indicateur destiné à indiquer que tout champ SPI dans un SPH associé à la SA sera inférieur à 32 bits.

7. Procédé selon l'une quelconque des revendications 1 à 6, dans lequel :
les données de charge utile comprennent des données de charge utile chiffrées, et
le procédé comprend en outre l'étape consistant à : avant d'obtenir la première PDU IP, générer une clé au moyen du SPI et du SSI et utiliser la clé afin de générer les données de charge utile chiffrées.

8. Programme d'ordinateur (643) comprenant des instructions (644) qui, lorsqu'elles sont exécutées par une circuiterie de traitement (602) d'un nœud de réseau, amènent le nœud de réseau à exécuter le procédé selon l'une quelconque des revendications 1 à 7.

9. Support contenant le programme d'ordinateur selon la revendication 8, dans lequel le support est l'un parmi un signal électronique, un signal optique, un signal radio et un support de stockage lisible par ordinateur (642).

10. Nœud de réseau (101, 102), le nœud de réseau comprenant :
un récepteur ;
un émetteur ; et
une circuiterie de traitement, dans lequel le nœud de réseau est configuré pour :
obtenir une première unité de données de protocole, PDU, du protocole Internet, IP (400), la première PDU IP comprenant :
un en-tête IP (401) ;
un en-tête de charge utile de sécurité, SPH (402), situé à la suite de l'en-tête IP, le SPH comprenant : un champ d'index de paramètre de sécurité, SPI (411), spécifiant un SPI destiné à identifier une association de sécurité, SA ; un champ d'identifiant de sous-espace, SSI (412), spécifiant un SSI destiné à identifier un sous-espace de numéro de séquence, SN ; et un champ de SN (413) spécifiant un SN ; et
des données de charge utile situées à la suite du SPH,
dans lequel le champ de SN est constitué de 32 bits, le champ de SSI est constitué de 8 bits, et le champ de SPI est constitué de 24 bits.

11. Nœud de réseau selon la revendication 10, dans lequel le nœud de réseau est en outre configuré pour exécuter le procédé selon l'une quelconque des revendications 2 à 7.
